# DEMANDE DE BREVET EUROPEEN

(11) **EP 2 374 653 A1**
(43) Date de publication de la demande: **12.10.2011**
(21) Numéro de dépôt: 11155535.5
(22) Date de dépôt: 23.02.2011
(51) Int. Cl.: B60N 2/01, B60N 2/28, B62D 31/00

(54) **Ensemble de sièges d'un véhicule automobile**

(30) Priorité: 08.04.2010 FR 1052637
(71) Demandeur: Peugeot Citroën Automobiles SA, 78140 Vélizy-Villacoublay (FR)
(72) Inventeur: Bertrand Belanger, Pascal, 78280 Guyancourt (FR)

(57) **Abrégé**

L'invention concerne un ensemble de sièges d'un véhicule automobile comprenant un siège avant (1), un siège arrière (3) et un siège enfant (33) disposé sur le siège avant (1). Selon l'invention, le siège enfant (33) est fixé sur le siège arrière (3).

L'invention trouve son application notamment dans le domaine des fixations pour siège enfant.

## Description

L'invention concerne un ensemble de sièges d'un véhicule automobile comprenant une rangée de sièges avant, une rangée de sièges arrière et un siège enfant disposé sur un siège avant.

Selon la législation en vigueur, pour pouvoir transporter un enfant dans un véhicule automobile, il faut que ce dernier soit équipé d'un siège enfant adapté à la taille et au poids de l'enfant à transporter. Pour des enfants relativement jeunes, le siège enfant peut être positionné sur le siège avant du véhicule. Le siège est placé sur l'assise du siège passager avant, de préférence dos à la route, c'est-à-dire que le dossier du siège enfant ne s'appuie pas sur le dossier du siège avant mais se trouve au contraire au plus proche du pare-brise. C'est le bord avant de l'assise du siège enfant qui se trouve contre le dossier du siège avant.

De nouvelles normes disposent également, en matière de sièges enfants, que ceux-ci soient ancrés au véhicule en trois points distincts de fixation (sièges dits « Isofix »). A cet effet, le siège enfant peut par exemple comprendre deux pinces métalliques de verrouillage situées sur la base arrière du siège enfant qui se clippent sur deux points d'ancrage fixés entre l'assise et le dossier de la banquette arrière de la voiture et une autre pince qui se clippe sur un troisième point d'ancrage pour la sécurité des enfants. Ce type de fixation facilite donc l'installation du siège enfant que l'on peut maintenant passer facilement d'une voiture à une autre et supprime les problèmes de ceinture trop courte et les sièges enfant mal fixés.

Certains véhicules, du fait de leur configuration, ne permettent pas de d'installer un siège enfant ni à l'avant, ni à l'arrière du véhicule.

Un tel véhicule, essentiellement à vocation urbaine, peut être par exemple un véhicule dont la taille est réduite par rapport aux véhicules conventionnels, tant en longueur qu'en largeur. Pour rendre le véhicule plus compact, les passagers arrière sont en quelque sorte imbriqués dans la rangée de sièges avant au niveau des genoux. De cette manière, les genoux des passagers arrière se trouvent au même niveau que le bassin des passagers avant. Cela permet de réduire la longueur d'habitabilité et donc la longueur du véhicule. Cette contrainte d'imbrication implique de réaliser des sièges avant différents des sièges de conception conventionnelle. Les sièges avant sont conçus avec des dossiers échancrés en partie basse et des assises également rétrécies vers l'arrière. Cela permet aux passagers arrière de passer leurs jambes de part et d'autre du siège avant car ils ne disposent pas de l'espace suffisant pour loger leurs jambes à l'arrière du siège avant. Cela implique une distance entre les dossiers de la rangée de sièges avant et les dossiers de la rangée de sièges arrière plus faible que dans les véhicules conventionnels.

Cette distance plus faible empêche l'usage d'un siège enfant à l'arrière du véhicule, notamment les sièges comprenant trois points de fixation sur le véhicule. Si on souhaite positionner le siège enfant sur un siège à l'avant du véhicule, la forme échancrée du dossier et de l'assise du siège empêche de fixer le siège enfant sur le siège avant du véhicule. Dans un tel véhicule, il n'est donc pas possible de positionner un siège enfant ni sur un siège arrière, ni sur un siège avant.

Le but de la présente invention est de proposer une solution pour fixer un siège enfant, en respectant les contraintes réglementaires dans un véhicule dont les dimensions sont réduites par rapport à un véhicule conventionnel.

A cet effet, l'invention concerne un ensemble de sièges d'un véhicule automobile comprenant un siège avant, un siège arrière et un siège enfant disposé sur le siège avant caractérisé en ce que le siège enfant est fixé sur le siège arrière.

Une fixation du siège enfant est de préférence située à l'avant de l'assise du siège arrière.

L'ensemble de sièges comprend avantageusement deux fixations du siège enfant situées à l'avant et de part et d'autre de l'assise du siège arrière.

Une fixation du siège enfant est de préférence située à la jonction de l'assise et du dossier du siège arrière.

Le dossier avant est préférentiellement troué pour permettre le passage d'une sangle qui relie du siège enfant à la fixation du siège arrière.

Le siège avant est de préférence reculé de façon à être au plus proche du siège arrière.

Le dossier du siège avant est avantageusement échancré.

L'assise du siège avant est de préférence échancrée.

L'invention concerne également un ensemble de sièges d'un véhicule automobile comprenant un siège avant, un siège arrière et un objet amovible apte à être fixé au véhicule par l'intermédiaire d'une sangle et disposé sur le siège avant caractérisé en ce que le siège arrière comprend deux fixations à l'avant de son assise et une fixation apte à recevoir la sangle.

D'autres particularités et avantages ressortiront clairement de la description qui en est faite ci-après, à titre indicatif et nullement limitatif, en référence aux dessins annexés, dans lesquels :
- la figure 1 est une vue en perspective d'un siège avant et d'un siège arrière selon l'invention ;
- la figure 2 est une vue de côté selon la figure 1 ;
- la figure 3 est une vue en perspective d'un siège avant sur lequel est disposé un siège enfant et d'un siège arrière;
- la figure 4 est une vue de côté selon la figure 3 ;
- la figure 5 est une vue de côté du siège arrière et du siège avant en position avancée dans le véhicule ;
- la figure 6 est une vue de côté du siège arrière et du siège avant en position reculée dans le véhicule.

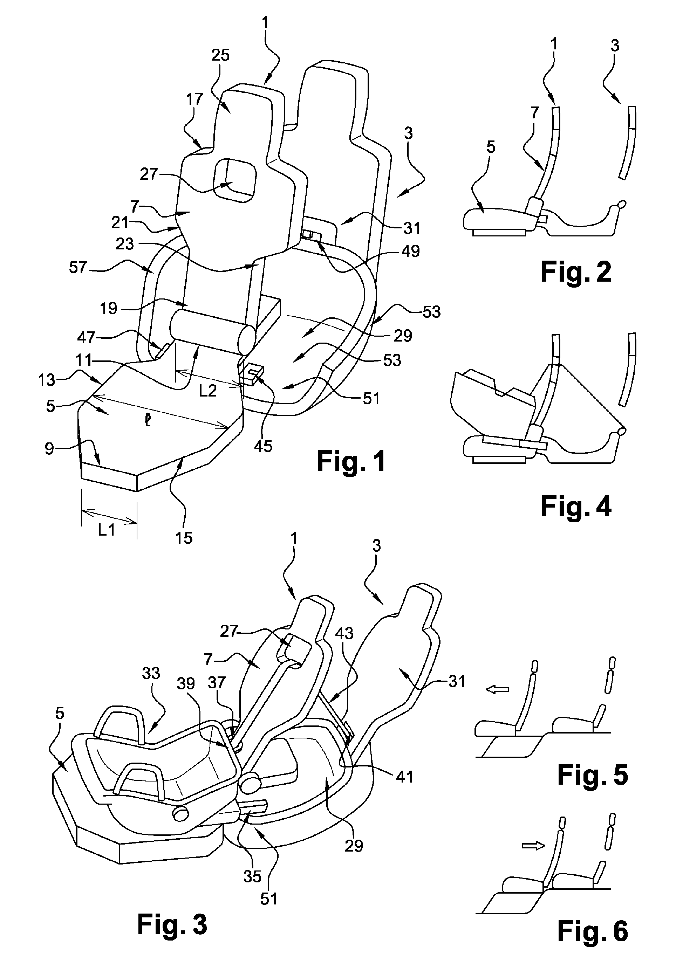

La figure 1 montre un siège avant 1 et un siège arrière 3 d'un véhicule automobile de taille réduite. Le siège arrière 3 comprend trois fixations pour pouvoir fixer un siège enfant.

Le siège avant 1 comprend une assise 5 et un dossier 7.

L'assise 5 du siège avant a une forme rétrécie vers l'avant et vers l'arrière. L'assise 5 comprend un bord avant 9, un bord arrière 11 et deux bords latéraux 13 et 15. Le bord avant 9 et le bord arrière 11 ont une longueur inférieure à la largeur I du milieu de l'assise 5. La longueur L1 et L2 des bords avant 9 et arrière 11 est de préférence sensiblement égale à la moitié de la largeur du milieu de l'assise. De cette manière, un passager avant peut être assis confortablement tandis qu'un passager assis à l'arrière peut placer ses jambes de part et d'autre du siège avant 1 au niveau de l'assise 5. Les bords latéraux 13 et 15 de l'assise avant 5 sont incurvés vers l'arrière. De cette manière, l'assise 5 est plus ergonomique pour pouvoir loger les genoux du passager arrière.

Le dossier 7 du siège avant 1 a une forme permettant à un passager d'appuyer son dos. Le dossier 7 comprend un bord supérieur 17, un bord inférieur 19 et deux bords latéraux 21 et 23. Le bord inférieur 19 est relié au bord arrière 11 de l'assise 5 formant ainsi la jonction de l'assise 5 et du dossier 7 du siège 1. Le bord inférieur 19 a sensiblement la même longueur que le bord arrière 11 de l'assise 5. Le bord supérieur 17 est plus long que le bord inférieur 19 du dossier 7. Le bord supérieur 17 a une longueur qui correspond environ à la largeur d'épaules d'un passager de taille moyenne. Le dossier 7 est également équipé d'un appui-tête 25 et une ouverture 27 au niveau du bord supérieur 17, sous l'appui-tête 25. Cette ouverture 27 doit être suffisamment grande pour permettre le passage d'une sangle.

Le siège arrière 3 comprend également une assise 29 et un dossier 31.

Le siège arrière 3 comprend trois fixations visibles sur les figures 1 et 3. Les fixations sont des points d'ancrage dans le véhicule. Les points d'ancrage peuvent être par exemple des anneaux en forme de U dont l'extrémité des branches sont fixées au siège du véhicule.

Selon la figure 3, un siège enfant 33 comprend des éléments de verrouillage de façon à permettre l'assemblage du siège enfant sur le véhicule. Les éléments de verrouillage du siège enfant peuvent être des pinces métalliques qui peuvent s'ouvrir et se refermer sur les anneaux des points d'ancrage. Le siège enfant 33 comprend trois éléments de verrouillage. Un premier élément 35 de verrouillage et un deuxième élément 37 de verrouillage sont situés sous le bord avant 39 de l'assise du siège enfant 33. Un troisième élément 41 de verrouillage est situé au niveau du milieu du bord avant 39 de l'assise du siège enfant 33 et comprend une sangle 43 à l'extrémité libre de laquelle se trouve l'élément de verrouillage proprement dit.

Selon la figure 1 , une première fixation 45 du siège arrière 3 du véhicule se trouve à droite à l'avant de l'assise arrière 29 et une deuxième fixation 47 se trouve à gauche à l'avant de l'assise. Une troisième fixation 49 se trouve à l'arrière de l'assise 29 à la jonction du dossier 31 et de l'assise.

L'assise 29 du siège arrière 3 est située à une certaine hauteur du plancher du véhicule. La partie entre le plancher et le bord avant de l'assise arrière peut être complètement pleine ou partiellement pleine. Dans tous les cas, cette partie comprend un support 51 sur lequel sont placées la première fixation 45 et la deuxième fixation 47. La première fixation 45 et la deuxième fixation 47 sont placées de part et d'autre du siège arrière 3 à proximité du bord avant 53 de l'assise et de préférence à une distance comprise entre 1 et 20 centimètres du bord avant de l'assise. La première et la deuxième fixation sont éloignées d'une distance correspondant à la distance des éléments de fixation du siège bébé. Elles sont éloignées d'une même distance des bords latéraux 55 et 57 de l'assise arrière 29.

Selon la figure 1, la troisième fixation 49 se trouve à l'intersection de l'assise 29 et du dossier 31. Comme pour la première fixation et la deuxième fixation, la troisième fixation 49 peut être un anneau auquel le troisième élément de verrouillage 41 peut se lier via la sangle 43. A cet effet, la sangle du siège enfant passe par l'ouverture 27 prévue sur le dossier 5 du siège avant 1.

Conformément à la figure 2, le siège avant 1 et le siège arrière 3 sont relativement proches l'un de l'autre. Pour les besoins de l'invention, ces sièges sont de préférence rapprochés au maximum. A cet effet, le siège avant peut coulisser d'avant en arrière sur des rails ménagés sur le plancher du véhicule.

Selon la figure 5, le siège avant 1 se trouve dans une position avancée dans le véhicule. En coulissant vers l'arrière, le siège avant 1 se trouve dans une position reculée sur la figure 6. Cette position reculée du siège avant est la configuration préférée pour l'invention.

Nous allons à présent décrire la façon dont un siège enfant peut être fixé dans un véhicule selon l'invention.

Tout d'abord, le siège enfant 33 est placé « dos à la route » sur le siège avant 1. Le siège avant 1 est reculé au maximum de telle sorte que la distance entre les dossiers respectivement du siège avant 1 et du siège arrière 3 est minimale. Puis, le premier élément 35 de verrouillage est relié à l'anneau de la première fixation 45 de l'assise 29 du siège arrière 3. Le deuxième élément 37 de verrouillage est relié à l'anneau de la deuxième fixation 47 de l'assise 29 du siège arrière 3. Enfin, la sangle 43 du troisième élément 41 de verrouillage est passée dans l'ouverture 27 du dossier 7 du siège avant 1 et le troisième élément 41 de verrouillage est relié à la troisième fixation 49 à la jonction de l'assise et du dossier du siège arrière. Les étapes de montage du siège enfant sur le siège avant du véhicule peuvent être réalisées dans un ordre différent.

Selon un objet de l'invention, plutôt que d'avoir un siège enfant, ile st également possible que le siège avant reçoive un autre objet qui soit amovible de type glacière ou tout autre objet qu'on aurait besoin de fixer lors de son transport.

## Revendications

1. Ensemble de sièges d'un véhicule automobile comprenant un siège avant (1), un siège arrière (3) et un siège enfant (33) disposé sur le siège avant **caractérisé en ce que** le siège enfant (33) est fixé sur le siège arrière (3).

2. Ensemble de sièges selon la revendication 1 **caractérisé en ce qu'**une fixation du siège enfant (33) est située à l'avant de l'assise (29) du siège arrière (3).

3. Ensemble de sièges selon la revendication 2 **caractérisé en ce qu'**il comprend deux fixations (45,47) du siège enfant (33) situées à l'avant et de part et d'autre de l'assise (29) du siège arrière (3).

4. Ensemble de sièges selon l'une quelconque des revendications précédentes **caractérisé en ce qu'**une fixation du siège enfant (33) est située à la jonction de l'assise (29) et du dossier (31) du siège arrière (3).

5. Ensemble de sièges selon la revendication 4 **caractérisé en ce que** le dossier avant (7) est troué pour permettre le passage d'une sangle qui relie du siège enfant (33) à la fixation (41) du siège arrière (3).

6. Ensemble de sièges selon l'une quelconque des revendications précédentes **caractérisé en ce que** le siège avant (1) est reculé de façon à être au plus proche du siège arrière (3).

7. Ensemble de sièges selon l'une quelconque des revendications précédentes **caractérisé en ce que** le dossier (7) du siège avant (1) est échancré.

8. Ensemble de sièges selon l'une quelconque des revendications précédentes **caractérisé en ce que** l'assise (5) du siège avant (1) est échancrée.

9. Ensemble de sièges d'un véhicule automobile comprenant un siège avant (1), un siège arrière (3) et un objet amovible apte à être fixé au véhicule par l'intermédiaire d'une sangle et disposé sur le siège avant (1) **caractérisé en ce que** le siège arrière (3) comprend deux fixations (45,47) à l'avant de son assise (29) et une fixation (49) apte à recevoir la sangle.
